Europäisches Patentamt

European Patent Office

Office européen des brevets

(19)

(11) Veröffentlichungsnummer: **0 247 284**
**B1**

(12) # EUROPÄISCHE PATENTSCHRIFT

(45) Veröffentlichungstag der Patentschrift:
31.01.90

(51) Int. Cl.⁴: **B60G 7/04**

(21) Anmeldenummer: **87102059.0**

(22) Anmeldetag: **13.02.87**

(54) Vorrichtung zum Begrenzen der vertikalen Einfederung eines Achskörpers gegenüber dem Rahmen von Nutzfahrzeugen.

(30) Priorität: 24.05.86 DE 3617494
21.06.86 DE 3620883

(43) Veröffentlichungstag der Anmeldung:
02.12.87 Patentblatt 87/49

(45) Bekanntmachung des Hinweises auf die Patenterteilung:
31.01.90 Patentblatt 90/5

(84) Benannte Vertragsstaaten:
AT BE CH DE FR GB IT LI NL

(56) Entgegenhaltungen:
DE-A- 3 515 130
DE-U- 7 812 392
FR-A- 436 718
FR-A- 969 407
GB-A- 545 841
NL-A- 6 803 415
US-A- 3 495 848
US-A- 3 770 077

PATENT ABSTRACTS OF JAPAN, Band 4,
Nr. 147 (M-36)[629], 16. Oktober 1980; &
JP-A-55 99 405 (SHINMEIWA KOGYO K.K.) 29-07-1980

(73) Patentinhaber: MAN Nutzfahrzeuge Aktiengesellschaft,
Dachauer Strasse 667 Postfach 50 06 20,
D-8000 München 50(DE)

(72) Erfinder: Krüger, Winfried, Buchenstrasse 19,
D-8044 Lohhof(DE)

## Beschreibung

Die Erfindung betrifft eine Vorrichtung zum Begrenzen der vertikalen Einfederung eines Achskörpers, gegenüber dem Rahmen eines Nutzfahrzeuges.

Der Rahmen eines Nutzfahrzeuges, besonders eines Lkw, weist zwei Rahmenlängsträger auf, die jeweils U-förmigen Querschnitt aufweisen und mit dem Steg dieses Querschnitts senkrecht stehen, während die Flansche dieser Rahmenlängsträger horizontal liegen und einander zugewandt sind.

Zwischen diesen Rahmenlängsträgern und der Achsanordnung waren bisher Gummianschläge angebracht, welche bei ungewöhnlich starkem Einfedern der Achse eine Beschädigung der Feder verhindern sollten. Zu diesem Zweck ist es bekannt, auf den beiden Schenkeln des Federbündels Gummipuffer anzuordnen, die einem Aufbauelement gegenüberliegen und das gegenseitige Einfedern begrenzen. Nachteilig bei dieser Anordnung ist jedoch nicht nur der Umstand, daß die Gummielemente bei wiederholtem, starkem Einfedern der Achse rasch verschleißen, sondern auch der Umstand, daß ein solcher Vorfall zu einer Beschädigung von Federblättern führen kann, da diese Federblätter mit einem erheblichen auf Biegung belasteten Hebelarm einen Teil der Kraftübertragung zwischen der einfedernden Achse und dem Aufbau bilden.

Um diesen und anderen Nachteilen abzuhelfen, wurde in einer älteren Patentanmeldung der Anmelderin (EP-A 0 199 183 zitiert gemäß Art. 54 (3) EPÜ, die dem Oberbegriff des Anspruchs 1 entspricht) bereits vorgeschlagen, einen Gummianschlag so auszubilden und am Rahmenlängsträger anzubringen, daß die übertragenen Kräfte nicht in den Flansch, sondern in den Steg des Rahmenlängsträgers eingeleitet werden und somit nicht zu Verformungen am Rahmenlängsträger führen. Je nach Anbringung dieses Gummianschlages aber kann es bei der genannten, gattungsbildenden Einrichtung nach wie vor zur Beschädigung der Feder kommen. Außerdem ist das Problem der raschen Abnutzung der Gummifeder nicht ausgeräumt, zumal in dieser verhältnismäßig hohe Scherkräfte auftreten.

Ausgehend von dieser Problemlage liegt der Erfindung die Aufgabe zugrunde, die eingangs genannte, bekannte Vorrichtung bzw. ein mit dieser ausgestattetes Nutzfahrzeug dahingehend weiterzubilden, daß die genannten Probleme möglichst weitgehend ausgeräumt werden und der rasche Verschleiß des Gumminanschlags sowie die Beschädigung der Feder und gegebenenfalls des Rahmenlängsträgers vermieden werden. Ferner soll ein Umbausatz geschaffen werden, mittels welchem die Umrüstung eines vorhandenen Fahrzeugs möglich ist.

Die genannten Probleme werden durch die Merkmale des Anspruchs 1 ausgeräumt; hierbei ist erfindungsgemäß der Gumminanschlag nicht mehr, wie bisher, beiderseits der Achse angebracht, sondern genau über der Achse und der Federspannplatte gegenüberliegend. Parallel zum Gummianschlag ist ein Festanschlag angebracht, der vom Gummianschlag um jenes Maß überragt wird, um welches der Gummianschlag zusammengedrückt werden kann, ohne noch Schaden zu nehmen. Hierbei ist erfindungsgemäß die Federspannplatte so stark verbreitert, daß sie als Gegenanschlag sowohl für den Gummianschlag als auch für den Festanschlag dient.

Hierdurch werden alle auftretenden Kräfte über die Federspannplatte verteilt und mittig in die Feder so eingeleitet, daß jede Biegebelastung der einzelnen Federblätter vermieden wird. Andererseits kann der Gummianschlag nur in einem solchen Ausmaß verformt werden, wie dies auf die Dauer unschädlich ist. Ein darüber hinausgehendes Einfedern ist nicht mehr möglich, da dann der Festanschlag wirksam wird.

Durch die Merkmale des Anspruchs werden die Kräfte über den Festanschlag unmittelbar in den Steg des Rahmenlängsträgers in Scherrichtung eingeleitet, so daß eine Verbiegung am Rahmenlängsträger ausgeschlossen ist.

In Anspruch 3 ist die besonders zweckmäßige Formgebung des Gummianschlags beansprucht, wobei die Federkonstante des Gummianschlags bei zunehmender Belastung progressiv steigt, so daß beim Aufsitzen des Festanschlages kein unangenehmer Stoß auftritt.

Ferner ist der Gummianschlag in die abgenommene Anschlaghaltung, die den Gummianschlag aufnimmt und den Festanschlag bildet, lediglich von oben her lose eingesetzt und kann somit rasch ausgewechselt werden.

Es wäre grundsätzlich möglich, die Anschlaghalterung mit dem Flansch des Rahmenlängsträgers zu verschrauben und so an diesem anzubringen, daß die Kraftübertragung zwischen Festanschlag und Rahmenlängsträger über dessen Seitenkante verläuft.

Gemäß einer weiteren Ausgestaltung der Erfindung aber ist zusätzlich oder stattdessen das den Festanschlag bildende Teil seinerseits mit dem Steg des Rahmenlängsträgers verschraubt, wodurch die Einleitung von Kräften in diesen noch weiter verbessert werden. Durch Lösen dieser Verschraubung kann die Anschlaghalterung abgenommen werden, so daß dann der Gummiabschlag ohne weiteres ausgetauscht werden kann. Auch ist durch diese Ausgestaltung der Erfindung die Umrüstung eines vorhandenen Fahrzeugs stark erleichtert.

Die Erfindung betrifft auch eine Einrichtung zum Umrüsten bekannter Nutzfahrzeuge, mit der oben beschriebenen Anschlaghalterung und einer passend zu dieser ausgebildeten und verbreiterten Federspannplatte. Der Umrüstvorgang ermöglicht somit lediglich die Anbringung der neuen Federspannplatte sowie die erforderlichen Bohrungen am Rahmenlängsträger zur Befestigung der Anschlaghalterung.

Durch Lösen dieser Verschraubung kann die Anschlaghalterung abgenommen werden, so daß dann der Gummianschlag ohne weiteres ausgetauscht werden kann. Auch ist durch diese Ausgestaltung der Erfindung die Umrüstung eines vorhandenen Fahrzeugs stark erleichtert.

Der Gegenstand der Erfindung wird anhand der beigefügten, schematischen Zeichnung beispielsweise noch näher erläutert; in dieser zeigen:

Fig. 1 den Vertikalschnitt durch die Achse eines Lkw, mit der erfindungsgemäßen Vorrichtung und

Fig. 2 die Explosionsdarstellung der Anschlaghalterung und des Gummianschlags der Ausführungsform der Fig. 1.

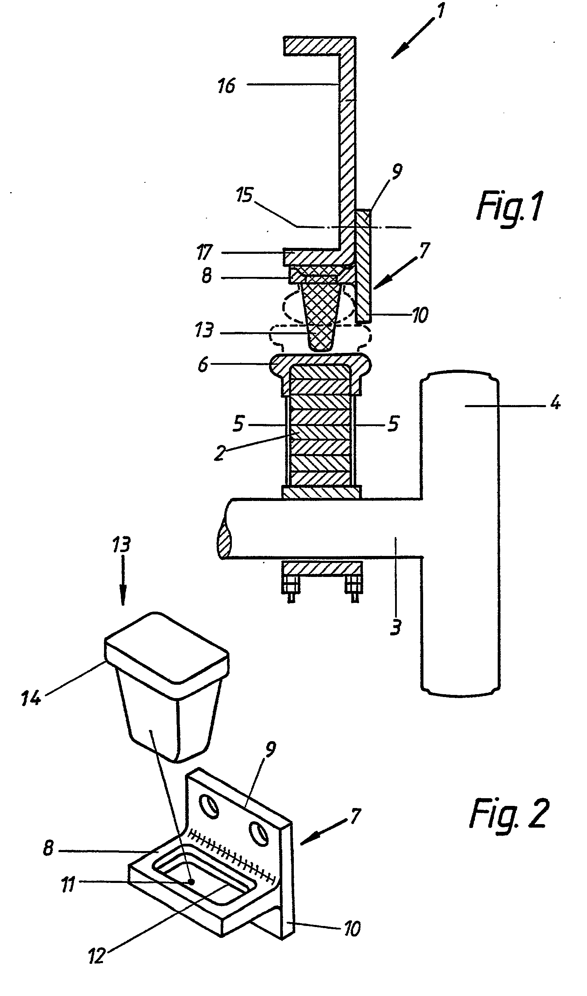

In Fig. 1 ist ein Rahmenlängsträger (1) gezeigt, unterhalb dessen eine Feder (2) angebracht ist, die auf der Achse (3) eines Lkw befestigt ist, an deren Außenseite ein Rad (4) drehbar gelagert ist.

Die Feder (2) ist aus einem Bündel übereinanderliegender Federblätter gebildet, die von Federbrieden (5) zusammengespannt sind. Auf der Oberseite des Federbündels (2) sitzt eine Federspannplatte (6), deren Oberseite mindestens zum Rad (4) hin verbreitert ist. Um ein symmetrisches, lageunabhängig einbaubares Bauteil zu bilden, ist in der gezeigten Ausführungsform die Federspannplatte (6) beiderseits verbreitert.

An der Unterkante des Rahmenlängsträgers (1) ist eine Anschlaghalterung (7) befestigt, die in Fig. 2 noch näher gezeigt ist.

Die Anschlaghalterung (7) besteht aus zwei ebenen Stahlblechen, die so zusammengeschweißt sind, daß das Teil (7) einen im wesentlichen T-förmigen Querschnitt aufweist, mit einem Mittelflansch (8), einem oberen Querschenkel (9) und einem unterem Querschenkel (10). Der obere und untere Querschenkel (9, 10) sind von einem durchgehenden Blech gebildet.

Im Mittelflansch (8) ist eine Aufnahmeöffnung (11) ausgebildet, in deren Umfangskante ein nach innen und oben überstehender Rand (12) ausgebildet ist.

Ein Gummianschlag (13) ist aus einem massiven, flexiblen Gummiblock gebildet und weist eine im wesentlichen kegelstumpfförmige Form auf, wobei das verjüngte Ende nach unten gerichtet ist. An der Basis ist ein Umfangsrand (14) komplementär zum Innenrand (12) der Aufnahmeöffnung (11) ausgebildet, so daß der Gummianschlag (13) von oben her in die Aufnahme (11) einlegbar ist, wie dies aus Fig. 1 ersichtlich ist.

Der obere Querschenkel (9) ist mit Spannschrauben (15) fest mit dem Steg (16) des Rahmenlängsträgers (1) verschraubt, während der Mittelflansch (8) die Anschlaghalterung (7) von unten her gegen den unteren Flansch (17) des Rahmenlängsträgers (1) anliegt.

Der untere Querschenkel (10) der Anschlaghalterung (7) erstreckt sich gegenüber der auswärts gerichteten seitlichen Verlängerung der Spannplatte (6) nach unten, und zwar um eine solche Strecke, daß er mit der Unterkante des Gummianschlags (13) gerade dann bündig in einer Höhe liegt, wenn der Gummianschlag (13) voll verformt bzw. der vorgesehene Federweg der Plattfeder erreicht ist (in Fig. 1 strichpunktiert gezeigt). Zu diesem Zeitpunkt erfolgt die Kraftübertragung zwischen der Achse (3) und der Federspannplatte (6) einerseits und dem Rahmenlängsträger (1) andererseits nicht mehr über den Gummianschlag (13), sondern über den einen den Festanschlag bildenden unteren Querschenkel (10) der Anschlaghalterung (7).

Zum Auswechseln des verschlissenen Gummianschlags (13) müssen lediglich die Spannschrauben (15) gelöst werden und ein neuer Gummianschlag (13) muß in die Aufnahme (11) eingesetzt werden, wonach die Spannschrauben (15) wieder anzubringen sind.

**Patentansprüche**

1. Vorrichtung zur Begrenzung der vertikalen Einfederung eines Achskörpers (3), der an einem Federbündel (a) angebracht ist, gegenüber einem oberhalb der Federspannplatte (6) des Federbündels (a) angeordneten, im Querschnitt U-förmigen Rahmenlängsträger (1) eines Nutzfahrzeugs, insbesondere eines Lkw, wobei der Steg (16) des Rahmenlängsträgers (1) vertikal steht und dessen unterer Flansch (17) horizontal liegt, mit einem am Rahmenlängsträger (1) angebrachten Gummianschlag (13), dadurch gekennzeichnet, daß
- der Gummianschlag (13) ausschließlich an der Unterseite des Flansches (17) angeordnet ist,
- seitlich neben dem Gummianschlag (13) ein mit dem Steg (16) des Rahmenlängsträgers (1) verbundener Festanschlag (10) angebracht ist, der vom Gummianschlag (13) um das Maß der für diesen noch zulässigen Verformung überragt wird und
- die Federspannplatte (6) soweit verbreitert ist, daß sie mit ihrer flachen Oberseite als Gegenanschlag sowohl für den Gummianschlag (13) als auch für den Festanschlag (10) eingerichtet ist.

2. Vorrichtung nach Anspruch 1, gekennzeichnet durch eine starre Anschlaghalterung (7) mit T-förmigem Querschnitt, deren Mittelflansch (8) von unten her gegen den unteren Flansch (17) des Rahmenlängsträgers (1) anliegt und eine Aufnahme (11) für den Gummianschlag (13) aufweist, wobei von den Querschenkeln (9, 10) des T-förmigen Querschnitts der eine (9) nach oben weist und gegen die Außenseite des Steges (16) des Rahmenlängsträgers (1) anliegt und der andere (10) nach unten weist und den Festanschlag bildet.

3. Vorrichtung nach Anspruch 2, dadurch gekennzeichnet, daß der Gummianschlag als sich nach unten verjüngender, vorzugsweise pyramidenstumpfförmiger, massiver Gummiblock (13) ausgebildet ist und an seiner Basis einen überstehenden Umfangsrand (14) aufweist, wobei die Aufnahme (11) in der Anschlaghalterung (7) passend zum Innenrand (12) so ausgebildet ist, daß der Gummianschlag (13) von oben her bei ausgebauter Anschlaghalterung (7) in deren Aufnahme (11) einsetzbar ist und von dieser nach Einbau gegen die Unterseite des Steges (17) des Rahmenlängsträgers (1) andrückbar ist.

4. Vorrichtung nach einem der Ansprüche 1 oder 2, dadurch gekennzeichnet, daß der obere Querschenkel (9) der Anschlaghalterung (7) mit dem Steg (16) des Rahmenlängsträgers (1) verschraubt ist.

5. Umbausatz für ein Nutzfahrzeug, bestehend aus einem Gummianschlag (13), einer Aufnahmehalterung (7) und einer Federspannplatte (6) in verbindung mit einer Vorrichtung nach einem der Ansprüche 2 - 4.

**Claims**

1. A device for limiting the vertical deflexion of an axle unit (3), which is mounted on a stack of springs (2), with respect to a longitudinal frame support (1) – arranged above the clamping plate (6) of the stack of springs (2) and U-shaped in cross-section – of a service vehicle, in particular a motor lorry, the web (16) of the longitudinal frame support (1) being vertical and the lower flange (17) thereof being horizontal, with a rubber stop (13) mounted on the longitudinal frame support (1), charaterized in that
   - the rubber stop (13) is mounted exclusively on the underside of the flange (17),
   - a fixed stop (10), which is connected to the web (16) of the longitudinal frame support (1) and beyond which the rubber stop (13) projects by the amount of the deformation still permissible therefor, is mounted laterally beside the rubber stop (13), and
   - the spring clamping plate (6) is widened to such an extent that it is set with its flat top side as a counter abutment both for the rubber stop (13) and for the fixed stop (10).

2. A device according to Claim 1, characterized by a rigid stop holding means (7) with a T-shaped cross-section, the central flange (8) of which bears from below against the lower flange (17) of the longitudinal frame support (1) and comprises a receiving means (11) for the rubber stop (13), one (9) of the transverse arms (9, 10) of the T-shaped cross-section facing upwards and bearing against the outside of the web (16) of the longitudinal frame support (1) and the other (10) facing downwards and forming the fixed stop.

3. A device according to Claim 2, characterized in that the rubber stop is formed as a downwardly tapering, preferably pyramidal-frustoconical, solid rupper block (13) and comprises a projecting peripheral edge (14) at its base, the receiving means (11) in the stop holding means (7) being adapted to the inner edge (12) in such a way that the rubber stop (13) can be inserted from above into the receiving means (11) of the stop holding means (7) when the latter is dismatled and can be pressed by the latter after assembly against the underside of the web (17) of the longitudinal frame support (1).

4. A device according to one of Claims 1 or 2, charaterized in that the upper transverse arm (9) of the stop holding means (7) is screwed to the web (16) of the longitudinal frame support (1).

5. A conversion set for a service vehicle, comprising a rubber stop (13), a receiving holding means (7) and a spring clamping plate (6) in conjunction with a device according to one of Claims 2 to 4.

**Revendications**

1. Dispositif de limitation du débattement vertical d'un corps d'essieu (3) monté sur un paquet de ressorts (2), par rapport à un support longitudinal du châssis (1) à section transversale en forme de U d'un véhicule utilitaire, qui est disposé au-dessus de la plaque de serrage de ressort (6) du paquet de ressort (2), en particulier du châssis d'un camion, l'âme (16) du support longitudinal de châssis (1) étant verticale et son rebord (17) étant horizontal, avec une butée en caoutchouc (13) montée sur le support longitudinal de châssis (1), caractérisé en ce que:
   - la butée en caoutchouc (13) est disposée exclusivement sur la face supérieure du rebord (17),
   - une butée rigide (10) reliée à l'âme du support longitudinal de châssis (1) est montée latéralement à côté de la butée en caoutchouc (13) et dépasse de la butée en caoutchouc (13) de la valeur de la déformation encore possible pour celle-ci, et
   - la plaque de serrage de ressort (6) est élargie jusqu'à ce qu'elle soit disposée avec sa face supérieure plate pour servir de contre-butée tant à la butée en caoutchouc (13) qu'également à la butée rigide (10).

2. Dispositif selon la revendication 1, caractérisé par une fixation de butée rigide (7) à section transversale, en forme de T, dont le rebord central (8) appuie par le dessous contre le rebord inférieur (17) du support longitudinal de châssis (1) et présente un logement (11) destiné à la butée en caoutchouc (13), l'une (9) des branches transversales (9, 10) de la section transversale en forme de T étant tournée vers le haut et appuie contre la face extérieure de l'âme (16) du support longitudinal de châssis (1) et l'autre (10) étant tourné vers le bas et formant la butée rigide.

3. Dispositif selon la revendication 2, caractérisé en ce que la butée en caoutchouc est réalisée sous la forme d'un bloc de caoutchouc (13) massif s'effilant vers le bas, de préférence en forme de pyramide tronquée, et présentant à sa base une bordure périphérique (14) saillante, le logement (11) étant réalisé dans la fixation de butée (7) en s'ajustant sur la bordure intérieure (12), de façon que, lorsque la fixation de butée (7) est démontée, la butée en caoutchouc (13) s'introduise par le haut, dans son logement (11) et qu'après montage elle soit susceptible de presser contre la face inférieure de l'âme (17) du support longitudinal de châssis (1).

4. Dispositif selon l'une des revendications 1 ou 2, caractérisé en ce que la branche transversale (9) supérieure de la fixation de butée (7) est vissée à l'âme (16) du support longitudinal de châssis (1).

5. Jeu de conversion pour un véhicule utilitaire, se composant d'une butée en caoutchouc (13), d'une fixation de logement (7) et d'une plaque de serrage de ressort (6), en liaison avec un dispositif selon l'une des revendications 2 à 4.

Fig.1

Fig. 2